# EUROPEAN PATENT APPLICATION

(11) **EP 4 773 664 A1**
(43) Date of publication of application: **08.07.2026**
(21) Application number: 24859667.8
(22) Date of filing: 26.08.2024
(51) Int. Cl.: H04W 28/14, H04W 84/12, H04W 92/20

(54) **ACCESS POINT DEVICE, CONTROL METHOD, AND PROGRAM**

(30) Priority: 31.08.2023 JP 2023141711; 05.06.2024 JP 2024091839
(71) Applicant: Canon Kabushiki Kaisha, Tokyo 146-8501 (JP)
(72) Inventor: MINAKAWA Atsushi, Tokyo 146-8501 (JP)
(74) Representative: Canon Europe Limited
(86) International application number: PCT/JP2024/030123
(87) International publication number: WO 2025/047634

(57) **Abstract**

An access point apparatus transmits a request frame requesting a transmission buffer status to one or more different access point apparatuses that perform coordinated communication, and receives a response frame including a transmission buffer status from the different access point apparatus.

## Description

### Technical Field

The present disclosure relates to an access point apparatus that communicates information.

### Background Art

As a communication standard for a wireless local area network (LAN), IEEE (the Institute of Electrical and Electronics Engineers) 802.11 standard is known. The IEEE 802.11 standard series includes standards, such as IEEE 802.11a/b/g/n/ac/ax/be (PTL 1). Regarding the IEEE 802.11be standard and its successor standards, an improvement has been discussed in communication efficiency and throughput by causing a plurality of access point apparatuses (hereinafter, also simply referred to as APs) to operate in coordination with each other. A communication technique in which a plurality of APs operates in coordination is referred to as "multi-AP communication", and the APs are classified into one Coordinator AP that manages all the APs and Coordinated APs that operate under the management of the Coordinator.

### Citation List

### Patent Literature

PTL 1: Japanese Patent Laid-Open No. 2018-050133

### Summary of Invention

### Technical Problem

As an example of multi-AP communication, a technique for high efficiency has been discussed. This technique is referred to as "coordinated time division multiple access (TDMA)", in which part of a transmission opportunity (TXOP) secured by one AP is shared with and allocated to other APs, and a plurality of APs performs coordinated communication in a time division manner.

However, in the current wireless LAN standards, a mechanism for acquiring information to determine a TXOP to be allocated to each AP when a plurality of APs performs coordinated communication is not defined.

### Solution to Problem

The present disclosure has been made in view of the above issues. One aspect of the present invention is to provide a mechanism for acquiring information to determine a TXOP to be allocated to each AP when a plurality of APs performs coordinated communication.

According to an aspect of the present invention, an access point apparatus that performs wireless communication compliant with an IEEE 802.11 standard in coordination with one or more different access point apparatuses, the access point apparatus includes a transmission unit configured to transmit a request frame requesting a transmission buffer status to the different access point apparatus, and a reception unit configured to receive a response frame including a transmission buffer status from the different access point apparatus.

### Advantageous Effects of Invention

In one aspect of the present invention, it is possible to provide a mechanism for acquiring information to determine a TXOP to be allocated to each AP when a plurality of APs performs coordinated communication.

### Brief Description of Drawings

[Fig. 1] Fig. 1 is a diagram illustrating a configuration example of a communication system.
[Fig. 2] Fig. 2 is a diagram illustrating a hardware configuration of an access point apparatus.
[Fig. 3] Fig. 3 is a diagram illustrating a software configuration of the access point apparatus.
[Fig. 4] Fig. 4 is a sequence diagram illustrating a process when access point apparatuses (APs) 101 and 102 perform downlink (DL) communication.
[Fig. 5] Fig. 5 is a sequence diagram illustrating a process when the APs 101 and 102 perform uplink (UL) communication.
[Fig. 6] Fig. 6 is a sequence diagram illustrating a process when the AP 102 performs both DL communication and UL communication.
[Fig. 7] Fig. 7 is a diagram illustrating an example of a Trigger frame according to the present invention.
[Fig. 8] Fig. 8 is a diagram illustrating a first example of a frame transmitted in response to the Trigger frame according to the present invention.
[Fig. 9] Fig. 9 is a diagram illustrating a second example of the frame transmitted in response to the Trigger frame according to the present invention.
[Fig. 10] Fig. 10 is a diagram illustrating a third example of the frame transmitted in response to the Trigger frame according to the present invention.
[Fig. 11] Fig. 11 illustrates an example of control executed by an AP 100.
[Fig. 12] Fig. 12 illustrates an example of control executed by the APs 101 and 102.
[Fig. 13] Fig. 13 is a diagram illustrating a fourth example of the frame transmitted in response to the Trigger frame according to the present invention.

### Description of Embodiments

The embodiments will now be described in detail with reference to the accompanying drawings. The following embodiments are not intended to limit the invention as defined by the claims. Although multiple features are described in the embodiments, not all of these features are essential to the invention, and the features may be combined arbitrarily. Furthermore, in the accompanying drawings, identical or similar components are denoted by the same reference numerals, and redundant descriptions are omitted.

### <Configuration of Communication System>

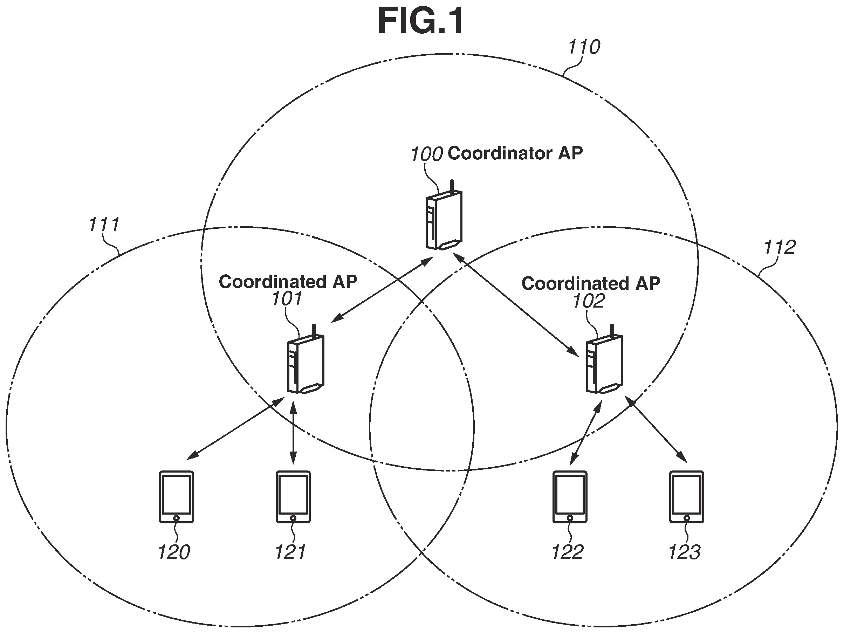

Fig. 1 illustrates a configuration example of a wireless communication system according to the present embodiment. The wireless communication system includes three access point apparatuses (hereinafter, also simply referred to as APs, AP STAs, or access points) and four station apparatuses (hereinafter, also simply referred to as STAs, Non-AP STAs, or stations). Hereinafter, APs 100 to 102 and STAs 120 to 123 are collectively referred to as "communication apparatuses".

The APs 100 to 102 are compliant with a successor standard of the IEEE (the Institute of Electrical and Electronics Engineers) 802.11be standard targeting a maximum transmission rate of 46.08 Gbps, and are configured to be able to execute communication of wireless frames compliant with a successor standard targeting a maximum transmission rate from 90 Gbps to 100 Gbps or more. Similarly, the STAs 120 to 122 are configured to be able to execute communication of wireless frames compliant with the successor standard.

Note that IEEE stands for Institute of Electrical and Electronics Engineers. The successor standard to IEEE 802.11be is characterized primarily by support for high-reliability communication, low-latency communication, and AP coordination. Based on the above, in the present embodiment, the successor standard to IEEE 802.11be, targeting a maximum transmission rate of over 90 Gbps to 100 Gbps, is also referred to as Ultra High Reliability (UHR) or IEEE 802.11bn. Furthermore, a wireless frame communicated under the successor standard is referred to as a UHR PPDU. PPDU stands for PLCP Protocol Data Unit, and PLCP stands for Physical Layer Convergence Protocol.

It should be noted that the names "IEEE 802.11bn" and "UHR standard" are provisionally used based on the objectives to be achieved and the key features of the successor standard, and may change once the standardization process is completed. On the other hand, this specification and the appended claims are essentially applicable to any successor standard to IEEE 802.11be that supports a function enabling multiple APs to perform coordinated communication using time-division multiple access (TDMA).

Although Fig. 1 illustrates a wireless communication network including three APs and four STAs as an example, the number of APs and the number of STAs may be larger or smaller than those illustrated in the drawing. In addition, while the APs 100 to 102 and the STAs 120 to 123 support the communication (transmission and reception) of UHR PPDU, in addition to this, the APs 100 to 102 and the STAs 120 to 123 may be configured to support PPDU communications of legacy standards which are standards before the UHR standard. Specifically, the APs 100 to 102 and the STAs 120 to 123 may be configured to support transmission and reception of PPDUs, such as the IEEE 802.11a/b/g/n/ac/ax/be standards.

The APs 100 to 102 are APs that perform a coordinated operation, and the AP 100 is an AP that performs overall control for the coordination. In the present embodiment, an AP such as the AP 100 that performs the overall control is also referred to as "Coordinator AP". Further, the APs 101 and 102 are APs that function as controlled apparatuses controlled by the Coordinator AP. In the present embodiment, APs such as the APs 101 and 102 controlled by the Coordinator AP are also referred to as "Coordinated APs". The roles of the Coordinator AP and the Coordinated APs may be dynamically switched. The AP 100 provides a network 110, the AP 101 provides a network 111, and the AP 102 provides a network 112. Each of the STAs 120 to 123 is an STA that participates in a network provided by a corresponding one of the APs.

In Fig. 1, the STAs 120 and 121 participate in the network 111 provided by the AP 101, and the STAs 122 and 123 participate in the network 112 provided by the AP 102. The APs 100 to 102 can perform multi-user (MU) communication in which communication is performed with a plurality of STAs at the same time using an OFDMA technology. In the MU communication using the OFDMA technology, one channel is divided into a plurality of sub-channels referred to as "resource units (RUs)". Then, each RU obtained by the division is handled as resources for communicating with a different STA (or a group of STAs including a plurality of STAs), enabling the AP and the plurality of STAs to simultaneously communicate with each other on one channel. In this case, an MU PPDU in which data has been modulated by OFDMA is transmitted from the AP to one or more STAs. In a case where all the apparatuses support the UHR standard, a UHR MU PPDU, which is an MU PPDU compliant with the UHR standard, is transmitted to one or more STAs.

Further, the APs 100 to 102 and the STAs 120 to 123 may be configured to support wireless communication based on other communication standards, such as Bluetooth^{®}, NFC, and Bluetooth^{®} LE (Low Energy). NFC is an abbreviation for Near Field Communication. The APs 100 to 102 may also be configured to support wired communication using Ethernet (registered trademark) cables or wired communication using optical fibers. Specific examples of the APs 100 to 102 and the STAs 120 to 123 include a wireless local area network (LAN) router and a personal computer (PC), but are not limited thereto. Further, the APs 100 to 102 and STAs 120 to 123 may be information processing apparatuses, such as wireless chips, that support transmission and reception of UHR PPDUs. In addition, specific examples of the STAs 120 to 123 include a camera, a tablet, a smartphone, a PC, a cellular phone, a video camera, and a wearable device such as smart glasses, but are not limited thereto.

In the present embodiment, when the APs 100 to 102 provide their respective networks, these different networks use different BSSIDs. "BSSID" is an abbreviation of Basic Service Set Identifier and is an identifier for identification of an access point.

Further, in the present embodiment, the communication apparatuses, such as the APs 100 to 102 and the STAs 120 to 123, can perform communication using a bandwidth of 20 MHz, 40 MHz, 80 MHz, 160 MHz, 320 MHz, 480 MHz, and 640 MHz

Next, a coordinated operation of causing a plurality of APs including the APs 100 to 102 to operate in coordination with each other will be described. The APs 100 to 102 can perform a coordinated operation. Specifically, the AP 100 can perform a coordinated TDMA communication function in which part of a secured transmission opportunity (TXOP) is shared with and allocated to other APs, and a plurality of APs including the AP 101 performs communication at different timing. An individual AP can perform downlink (DL) communication or uplink (UL) communication with the STAs connected thereto by using a TXOP allocated thereto. In the present embodiment, although the AP 100 is the Coordinator AP sharing and allocating its TXOP, another AP that initially secures a TXOP may function as the Coordinator AP, and the roles of the Coordinator AP and a Coordinated AP may be dynamically switched.

Hereinafter, a mechanism for performing the Coordinated TDMA communication function will be described in detail. In order to effectively describe the Coordinated TDMA function, the following describes that, in the wireless communication system according to the present embodiment, the APs 100 to 102 provide a network in which the STAs can participate with the same operating frequency band and the same bandwidth.

### (Configuration of Apparatus)

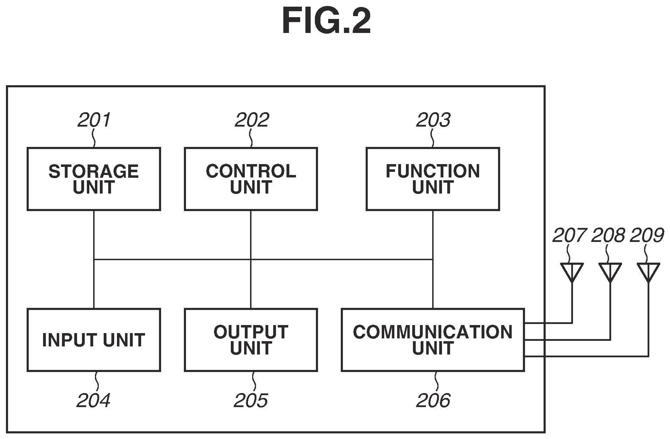

Fig. 2 illustrates an example of a hardware configuration of an AP. The AP includes, as an example of its hardware configuration, a storage unit 201, a control unit 202, a function unit 203, an input unit 204, an output unit 205, a communication unit 206, and antennas 207 to 209.

The storage unit 201 is constituted by a ROM and/or a RAM, and stores programs for various operations described below and various types of information, such as communication parameters for wireless communication. RAM is an abbreviation for random access memory, and ROM is an abbreviation for read-only memory. Alternatively, a storage medium, such as a nonvolatile storage device such as a hard disk or a solid state drive (SSD), may be used as the storage unit 201.

The control unit 202 is configured by, for example, a processor such as a CPU or an MPU, an application-specific integrated circuit (ASIC), a digital signal processor (DSP), a field-programmable gate array (FPGA), or the like. Here, CPU is an acronym for Central Processing Unit, and MPU is an acronym for Micro Processing Unit. The control unit 202 controls the entire apparatus by executing a program stored in the storage unit 201 and operating a hardware circuit, such as an ASIC. The control unit 202 may control the entire apparatus in coordination with a program stored in the storage unit 201 and an operating system (OS).

The control unit 202 controls the function unit 203 to execute a predetermined process, such as imaging, printing, and projection. The function unit 203 is hardware for the apparatus to execute a predetermined process. For example, in a case where the communication apparatus is a camera, such as a digital still camera or a smartphone having a camera, the function unit 203 is an imaging unit and performs an imaging process of a surrounding image via a camera unit (not illustrated) included in the communication apparatus. For example, when the communication apparatus is a printer, the function unit 203 is a printing unit and performs a printing process on a sheet, such as paper, based on print information obtained from the outside by wireless communication. For example, when the communication apparatus is a projector or a smart glass, the function unit 203 is a projection unit and performs a projection process of image data or video data obtained from the outside by wireless communication. In the case of smart glasses, the projection surface is the retina of the end user, for example. The data processed by the function unit 203 may be data stored in the storage unit 201 or data obtained by communication with another AP or STA via the communication unit 206 described below. Further, the communication apparatus, such as the AP 101, can provide a network storage function, such as a network attached storage (NAS). The function is provided to other communication apparatuses as a web service, such as a network storage service. For example, communication apparatuses, such as STAs, connect to network storage services provided by the APs 101 to 103 or the like using a protocol such as SMB, FTP, or WebDAV. The communication apparatuses, such as STAs, upload files to these storage services or download files in these storages. The data communication for uploading and downloading files is also realized by communicating UHR PPDUs between apparatuses.

The input unit 204 receives various kinds of operations from a user. The output unit 205 outputs various kinds of information to the user. Here, the output by the output unit 205 includes at least one of display on a screen, audio output by a speaker, vibration output, and the like, for example. Both the input unit 204 and the output unit 205 may be implemented by one module, such as a touch panel.

The communication unit 206 controls wireless communication compliant with the IEEE 802.11 standard series, and controls IP communication. In the present embodiment, the communication unit 206 can transmit and receive a UHR PPDU, which is a wireless frame of the UHR standard, and a PPDU compliant with standards prior to the UHR PPDU, in coordination with the antennas 207 to 209. The antennas 207 to 209 are antennas capable of transmitting and receiving signals in at least one of frequency bands of, for example, a sub-GHz band, a 2.4 GHz band, a 5 GHz band, a 6 GHz band, a 7 GHz band, and a 60 GHz band. Although the apparatus includes three antennas in the present embodiment, the apparatus may include only one antenna. Alternatively, the apparatus may include a different antenna for each frequency band. In addition, in a case where the apparatus includes a plurality of antennas, the apparatus may include a plurality of communication units 206, each of which corresponds to a different one of the antennas.

In a case where the communication apparatus is compatible with the above-described NFC standard, Bluetooth^{®} standard, and the like, the communication unit 206 may be configured to control wireless communication complying with these communication standards.

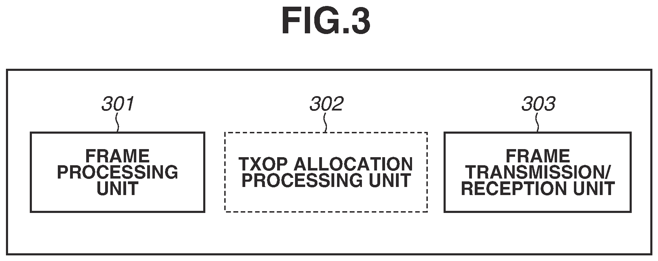

Next, a functional configuration of the APs 100 to 102 will be described with reference to Fig. 3. In Fig. 3, a functional configuration to be used for the description of the TXOP allocation function is extracted and illustrated. The individual AP includes a frame processing unit 301, a TXOP allocation processing unit 302, and a frame transmission/reception unit 303.

Each function will be described. The frame processing unit 301 interprets various kinds of wireless frames received from the outside in coordination with the antennas 207 to 209, notifies a function of an upper layer (not illustrated) of the interpretation result, and performs wireless communication control processing based on information obtained by the interpretation. In a case where the AP is a data transmission source communication apparatus, the AP generates a data frame. When the AP is the AP 100, the frame processing unit 301 serves as a block that generates a Multi-AP BSRP (Buffer Status Report Poll) Trigger frame to be transmitted to the APs 101 and 102, in order to acquire information to determine TXOPs. In this case, the frame processing unit 301 acquires information to determine TXOPs from AP BSR (Buffer Status Report) frames received from the APs 101 and 102, and generates Trigger frames to allocate the determined TXOPs to the APs 101 and 102. When the AP is the AP 101 or 102, the frame processing unit 301 serves as a block that processes a Multi-AP BSRP Trigger frame received from the AP 100, generates an AP BSR frame including information to determine a TXOP, and processes a Trigger frame to allocate the TXOP received from the AP 100.

When the AP is the AP 100, the TXOP allocation processing unit 302 determines the TXOPs to be allocated to the APs 101 and 102 based on the information to determine the TXOPs included in the AP BSR frames acquired from the APs 101 and 102. When the AP is the AP 101 or 102, the TXOP allocation processing unit 302 determines the TXOP allocated thereto in accordance with the content of the Trigger frame to allocate the TXOP and communicates with the STAs connected thereto.

The frame transmission/reception unit 303 transmits a wireless frame, such as a UHR PPDU, generated by the frame processing unit 301 to an external AP or STA in coordination with the antennas 207 to 209. Specific formats of the Multi-AP BSRP Trigger frame and the AP BSR frame will be described below.

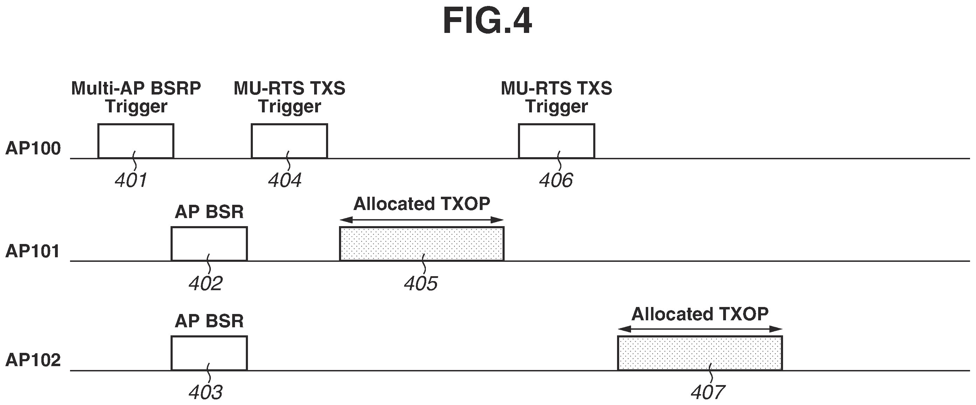

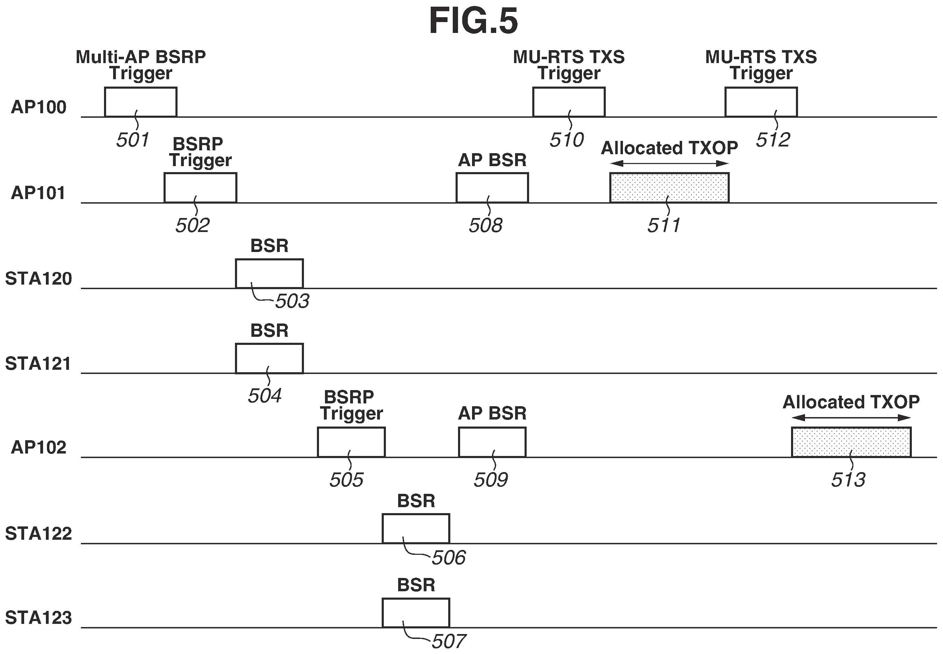

Next, a procedure to acquire information to determine the TXOPs to be allocated to the Coordinated APs will be described with reference to sequence diagrams in Figs. 4 and 5. Fig. 4 is a sequence diagram illustrating an example of exchange of wireless frames in a case where the Coordinated APs wish to execute DL communication with their respective STAs connected thereto. "DL communication" refers to data communication in the direction from an AP to an STA.

The AP 100, which is the Coordinator AP, transmits a Multi-AP BSRP Trigger frame 401, which is a request frame requesting information to determine a TXOP to be allocated to each of the Coordinated APs performing a coordinated operation. In response to receipt of the Multi-AP BSRP Trigger frame 401, the APs 101 and 102 transmit AP BSR frames 402 to 403, which include their transmission buffer statuses to be used for DL communication with their respective STAs, to the AP 100 as response frames. In the present embodiment, the Multi-AP BSRP Trigger frame 401 includes allocation information about an RU used when an individual AP transmits an AP BSR frame. Thus, the APs 101 and 102 simultaneously transmit the AP BSR frames 402 and 403 by using their RU allocated by OFDMA communication. The transmission of the AP BSR frames is not limited to the OFDMA communication, and the AP BSR frames may be transmitted in a time-division manner by the TDMA communication in accordance with the transmission order of the APs, which is specified by the Multi-AP BSRP Trigger frame, for example.

In response to receipt of the AP BSR frames 402 and 403, the AP 100 checks the transmission buffer statuses that the APs need for their DL communication, and can determine the TXOPs to be allocated.

After determining the TXOPs to be allocated, the AP 100 notifies the APs 101 and 102 of their respective TXOP allocation information. This notification can be performed by transmitting MU-RTS TXS Trigger frames 404 and 406, for example. However, the notification method is not limited to this example, as long as the APs 101 and 102 can be notified of the information about their respective TXOPs to be allocated. The MU-RTS TXS Trigger frames are frames used in the standard of IEEE802.11be and the successor standards thereof. The APs 101 and 102, which have received the notification, execute the DL communication process with their STAs connected thereto during periods of a TXOP 405 and a TXOP 406 allocated thereto, respectively. In the present embodiment, the AP 100 transmits an MU-RTS TXS Trigger frame to each of the APs 101 and 102 to notify their respective TXOPs to be allocated. However, a single frame may be used to indicate the information about the TXOPs to be allocated to the APs 101 and 102 and the allocation order of the TXOPs.

Fig. 5 is a sequence diagram illustrating an example of exchange of wireless frames in a case where the Coordinated APs wish to execute UL communication with their STAs connected thereto. "UL communication" refers to data communication in the direction from an STA to an AP.

The AP 100, which is the Coordinator AP, transmits a Multi-AP BSRP Trigger frame 501 requesting information to determine the TXOPs to be allocated to the Coordinated APs performing a coordinated operation. In response to receipt of the Multi-AP BSRP Trigger frame 501, the APs 101 and 102 check the transmission buffer statuses of their respective STAs, to perform UL communication with their respective STAs 120 to 123 connected thereto. The Multi-AP BSRP Trigger frame 501 may include information about the order in which the APs 101 and 102 transmit BSRP Trigger frames, information about the timing at which these APs transmit AP BSR frames, and information about the allocation of RUs to be used when these APs transmit the AP BSR frames. In the present embodiment, the APs 101 and 102 transmit their BSRP Trigger frame in this order. That is, the AP 101 first transmits a BSRP Trigger frame 502, receives notifications based on BSR frames 503 and 504 from its corresponding STAs, and acquires the buffer statuses of the STAs. The BSRP Trigger frame and the BSR frame are frames used in the standard of IEEE802.11ax and the successor standards thereof. Subsequently, the AP 102 transmits a BSRP Trigger frame 505, receives notifications based on BSR frames 506 and 507 from its corresponding STAs, and acquires the transmission buffer statuses of the STAs. Next, the APs 101 and 102 simultaneously transmit AP BSR frames 508 and 509 by using their RU allocated by OFDMA communication in accordance with the timing information specified by the Multi-AP BSRP Trigger frame 501. The transmission of the AP BSR frames is not limited to the OFDMA communication, and the AP BSR frames may be transmitted in a time-division manner by the TDMA communication in accordance with the transmission order of the APs specified by the Multi-AP BSRP Trigger frame, for example. In addition, in a case where an AP that has received the Multi-AP BSRP Trigger frame has already grasped the transmission buffer statuses of its corresponding STAs connected thereto by transmitting a BSRP Trigger frame before receiving the Multi-AP BSRP Trigger frame, this AP may directly transmit the AP BSR frame without transmitting a BSRP Trigger frame again.

In response to receipt of the AP BSR frames 508 and 509, the AP 100 can check the transmission buffer statuses that the APs need for their UL communication and can determine the TXOPs to be allocated.

After determining the TXOPs to be allocated, the AP 100 notifies the APs 101 and 102 of their respective TXOP allocation information by using MU-RTS TXS Trigger frames 510 and 512, as illustrated in Fig. 4. The APs 101 and 102, which have received the notification, execute the UL communication process with their STAs connected thereto during periods of a TXOP 511 and a TXOP 513 allocated thereto, respectively.

As described above with reference to Figs. 4 and 5, the AP 100, which has transmitted the Multi-AP BSRP Trigger frame, can acquire information to determine the TXOPs to be allocated to the Coordinated APs.

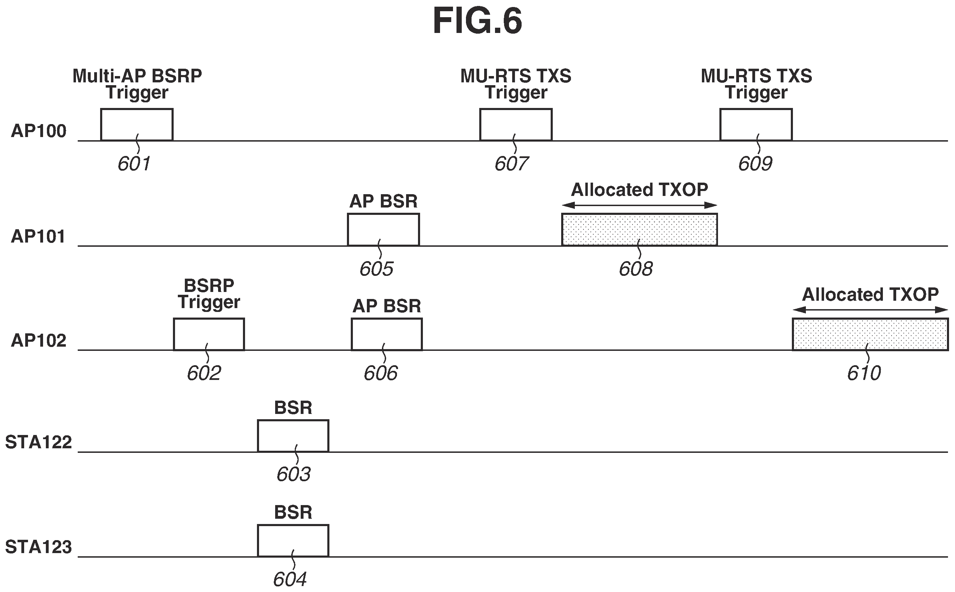

The case of DL communication and the case of UL communication have been described separately with reference to Figs. 4 and 5. Fig. 6 is a sequence diagram illustrating an example of exchange of wireless frames in a case where a Coordinated AP wishes to execute both DL communication and UL communication. In Fig. 6, the AP 101 wishes to execute only DL communication, and that the AP 102 wishes to execute both DL communication and UL communication.

The AP 100, which is the Coordinator AP, transmits a Multi-AP BSRP Trigger frame 601 requesting information to determine the TXOPs to be allocated to the Coordinated APs performing a coordinated operation.

In response to receipt of the Multi-AP BSRP Trigger frame 601, the AP 101 transmits an AP BSR frame 605 including a transmission buffer status to be used for DL communication with its corresponding STAs connected thereto to the AP 100 at a predetermined timing, as described with reference to Fig. 5. When the AP 102 receives the Multi-AP BSRP Trigger frame 601, the AP 102 transmits a BSRP Trigger frame 602 for checking the transmission buffer statuses of its corresponding STAs, as described with reference to Fig. 5, in a case where the AP 102 performs not only DL communication but also UL communication. In response to receipt of BSR frames 603 and 604 from the STAs 122 and 123, the AP 102 adds information including the transmission buffer statuses of these STAs and the transmission buffer status to be used for the AP 102 to perform DL communication in an AP BSR frame 606, and transmits this AP BSR frame 606 to the AP 100. The AP 100, which has determined the TXOPs to be allocated, notifies each of the APs 101 and 102 of the TXOP allocation information using MU-RTS TXS Trigger frames 607 and 609, as illustrated in Fig. 4. In response to receipt of the notification, the AP 101 executes a DL communication process with its corresponding STAs connected thereto during period of an allocated TXOP 608, and the AP 102 executes DL and UL communication processes with its corresponding STAs connected thereto during a period of an allocated TXOP 610.

As described above with reference to Fig. 6, even when a Coordinated AP wishes to execute both DL communication and UL communication, the AP 100 can acquire information to determine a TXOP to be allocated.

### (Frame Configuration)

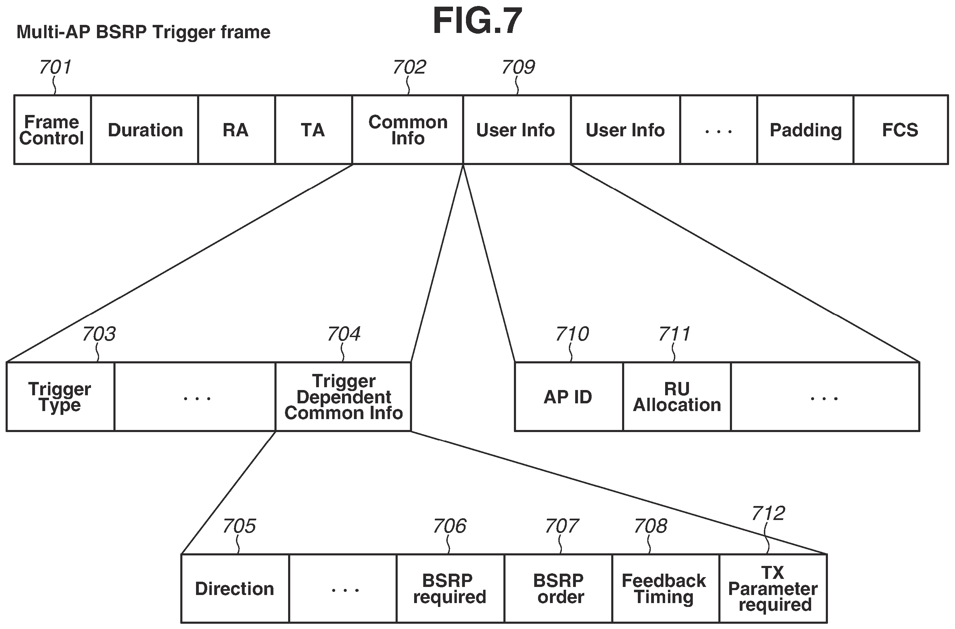

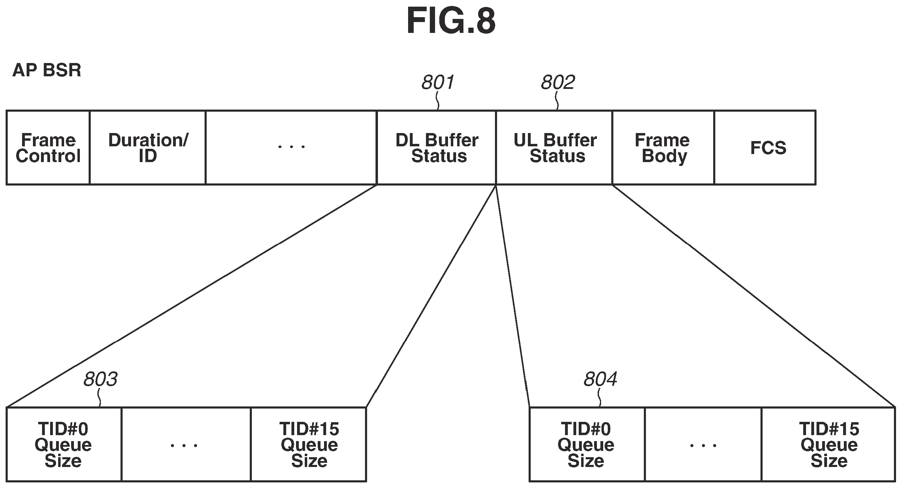

Next, the configurations of frames communicated in the present embodiment will be described with reference to Fig. 7 and 8.

Fig. 7 is a diagram illustrating an example of the format of a Multi-AP BSRP Trigger frame transmitted by the AP 100. A Frame Control field 701 is a field in which a value indicating that the frame is a Trigger frame compatible with the standard of IEEE 802.11ax and the successor standards thereof is entered, for example. A Common Info field 702 indicates information common to a plurality of APs that are the destinations of this Trigger frame. A Trigger Type field 703 contains information for identification of the Trigger frame as indicated in Table 1. A Trigger Dependent Common Info field 704 contains information that depends on each Trigger frame.

**[Table 1]**

| Type Values | Trigger Frame Types |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Multi-AP BSRP |
| 9 | Multi-AP BSRP-DL |
| 10 | Multi-AP BSRP-UL |
| 11-15 | Reserved |

The Trigger frame illustrated in Fig. 7 is referred to as, for example, "Multi-AP BSRP Trigger frame". In that case, the Trigger Type field 703 is "8". As another method, for example, the Trigger Type of the Multi-AP BSRP Trigger frame may be newly defined and used from among the values indicated by Reserved in Table 1.

Furthermore, a Trigger Type that determines whether the information about the transmission buffer status to be responded is for DL communication or for UL communication may be newly defined and used. In response to receipt of a DL communication Trigger frame, a Coordinated AP sends back information about the transmission buffer status to be used for DL communication. This DL communication Trigger frame is referred to as, for example, "Multi-AP-BSRP DL Trigger frame", and the Trigger Type is defined as "9". On the other hand, in response to receipt of an UL communication Trigger frame, a Coordinated AP transmits information about the transmission buffer status to be used for UL communication, as a response. This UL communication Trigger frame is referred to as, for example, "Multi-AP-BSRP UL Trigger frame", and the Trigger Type is defined as "10". A Trigger Type indicating that the Trigger frame is for both UL communication and for DL communication may be newly defined and used. The Trigger Type may be defined from among the values indicated by Reserved, or a Multi-AP BSRP Trigger frame defined as "8" may be used.

Furthermore, identification information for determination of whether the Trigger frame is for DL communication or UL communication may be determined using other information, instead of using the Trigger Type. For example, a field for setting information indicating this distinction may be prepared in a trigger dependent common info field 704. For example, a Direction field 705 may be prepared. In this case, when "0" is set in this field, the field may indicate the DL communication. When "1" is set in the field, the field may indicate UL communication. When "2" is set in the field, the field may indicate both the DL communication and the UL communication. A Coordinated AP that has received a Trigger frame whose trigger type is "8" can check the corresponding subfield and can determine whether this Trigger frame is for DL communication or UL communication.

The Trigger Dependent Common Info field 704 may include a BSRP Required field 706 indicating whether the AP that has received the Multi-AP BSRP Trigger frames needs to transmit a BSRP Trigger frame to its corresponding STAs connected thereto. For example, when "0" is set in the BSRP Required field 706, transmission of the BSRP Trigger frame is not required. When "1" is set, transmission of the BSRP Trigger frame is required. In a case where "0" is set in the BSRP Required field or in a case where the AP has already grasped the transmission buffer status of its corresponding STAs connected thereto, the AP may transmit an AP BSR frame without transmitting a BSRP Trigger frame again. A BSRP order field 707 is information indicating the transmission order when each AP is caused to transmit a BSRP Trigger frame. For example, a list of BSSIDs indicating the transmission order of the APs may be included, or a list of BSS colors may be included. In addition, a Feedback Timing field 708 includes information indicating the timing at which each AP transmits an AP BSR frame.

For example, the time from the reception time of a Multi-AP BSRP Trigger frame to the transmission of an AP BSR may be indicated in units of microseconds or milliseconds. The Trigger Dependent Common Info field 704 may include a TX Parmeter Required field 712 indicating that the transmission parameters of the AP for DL communication or the transmission parameters of the STAs for UL communication are requested, in addition to requesting the individual AP to transmit its transmission buffer status. The transmission parameters include, for example, in the case of DL communication, information about a modulation and coding scheme (MCS) applied to a PPDU transmitted by the AP when the AP performs DL communication with its corresponding STAs connected thereto and transmission power. In addition, the transmission parameters include, for example, in the case of UL communication, information about an MCS applied to a PPDU transmitted by the corresponding STAs when the AP performs UL communication with the corresponding STAs connected thereto and transmission power.

For example, when "0" is set in the TX Parmeter Required field 712, the transmission parameters do not need to be included in the AP BSR frame. When "1" is set, the transmission parameters need to be included in the AP BSR frame. The coordinator AP can more accurately determine the TXOPs to be allocated to the Coordinated APs by acquiring the DL or UL communication transmission parameters in addition to the DL or UL communication transmission buffer amounts of the Coordinated APs. In the example in Fig. 7, the TX Parmeter Required field 712 is a field indicating that the transmission parameters of the AP for DL communication and the transmission parameters of the STAs for UL communication are requested. However, the field may be divided into a field for DL communication and a field for UL communication.

Information specific to each AP is stored in a User Info field 709. Information for identification of the AP is stored in an AP ID field 710 and includes information such as a BSSID or a BSS color. An RU Allocation field 711 is information indicating an RU of OFDMA allocated to the AP specified by the AP ID field 710. The individual AP may simultaneously transmit an AP BSR frame in OFDMA communication, using the RU allocated thereto.

In addition, the Frame Control field 701 includes a Type subfield and a Subtype subfield indicating a frame type. In the present embodiment, a frame including "01" in the Type subfield and "0010" in the Subtype subfield is defined as a Multi-AP-BSRP Trigger frame. The Type subfield and the Subtype subfield may have different values as long as a Multi-AP-BSRP Trigger frame can be identified. For example, as illustrated in Table 2, a frame including "11" indicating Extension in the Type subfield and "0011" in the Subtype subfield may be defined as a Multi-AP-BSRP Trigger frame.

**[Table 2]**

| Type Values B3 B2 | Type Description | Subtype Values B7 B6 B5 B4 | Subtype Description |
|---|---|---|---|
| 11 | Extension | 0000 | DMG Beacon |
| 11 | Extension | 0001 | SIG Beacon |
| 11 | Extension | 0010 | Multi-AP BSRP Trigger |
| 11 | Extension | 0011-1111 | Reserved |

The Multi-AP BSRP Trigger frame is an example of the name of a frame for a request for information for determination of the TXOPs to be allocated to the access points. Another name may be used alternatively.

Fig. 8 illustrates an example of the configuration of an AP BSR frame used when the APs 101 and 102 notify AP 100. Information indicating the transmission buffer status for DL communication is included in a DL Buffer Status field 801. The DL Buffer Status field 801 includes the Queue sizes of TIDs (Traffic Identifiers) #0 to #15. For example, TID#0 Queue size 803 indicates a total Queue size obtained by aggregating the transmission buffer statuses of data of TID #0 addressed to all STAs. Information indicating the transmission buffer status for UL communication is included in an UL Buffer Status field 802. The UL Buffer Status field 802 includes the Queue sizes of TIDs #0 to #15. For example, TID #0 Queue size 804 indicates a total Queue size obtained by aggregating the transmission buffer statuses of all the STAs having the data of TID #0. The Queue size may indicate the number of octets indicating the data size, or may indicate the number of data blocks of a predetermined number of octets. Further, the Queue sizes of TIDs #0 to #15 may be indicated for each STA.

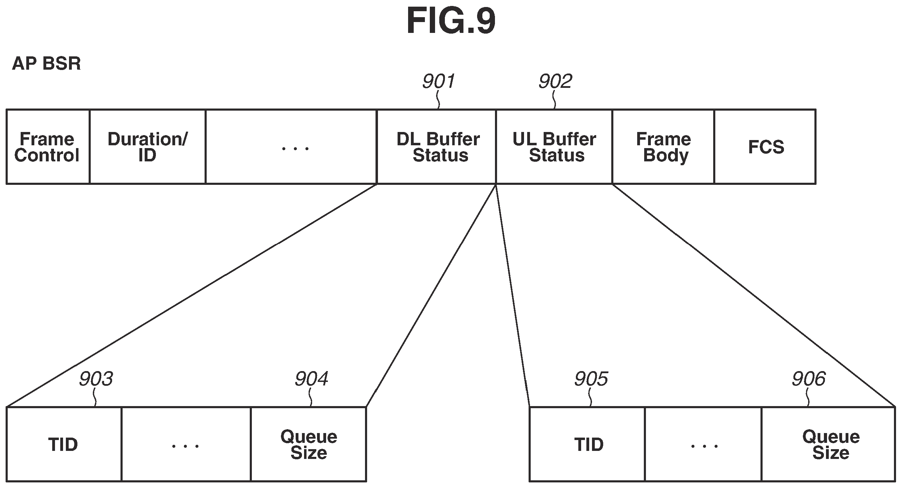

Fig. 9 illustrates another configuration example of the AP BSR frame. In the example in Fig. 8, one DL Buffer Status field includes all the Queue sizes of TIDs #0 to #15. However, in Fig. 9, one DL Buffer Status field includes a TID field 903 for identification of a TID and a Queue size field 904 indicating a transmission buffer status. The Queue size field 904 indicates a total queue size obtained by aggregating the transmission buffer statuses of the data of all the STAs of the TID specified in the TID field 903. Similarly, an UL Buffer Status field 902 also includes a TID field 905 for identification of a TID and a Queue size field 906 indicating the UL transmission buffer status of the TID specified by the TID field 905. When data of a plurality of TIDs is buffered, the AP BSR frame may include a plurality of DL Buffer status fields or UL buffer status fields.

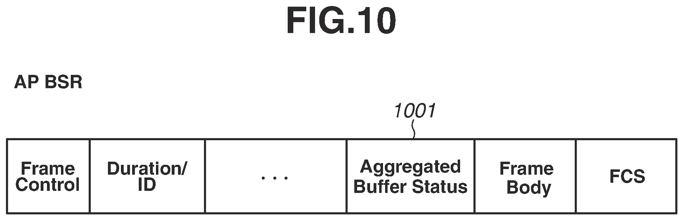

Fig. 10 illustrates another configuration example of the AP BSR frame. In Figs. 8 and 9, the field indicating the transmission buffer status is divided into a field for DL communication and a field for UL communication. However, in Fig. 10, one field in which the transmission buffer statuses for DL communication and UL communication are aggregated is used. An Aggregated Buffer Status field 1001 includes a total Queue size obtained by aggregating the transmission buffer status for DL communication and the transmission buffer status for UL communication.

Although the Queue size for each TID is illustrated in Figs. 8 and 9, a Queue size indicating the sum of the Queue sizes of all the TIDs may be indicated.

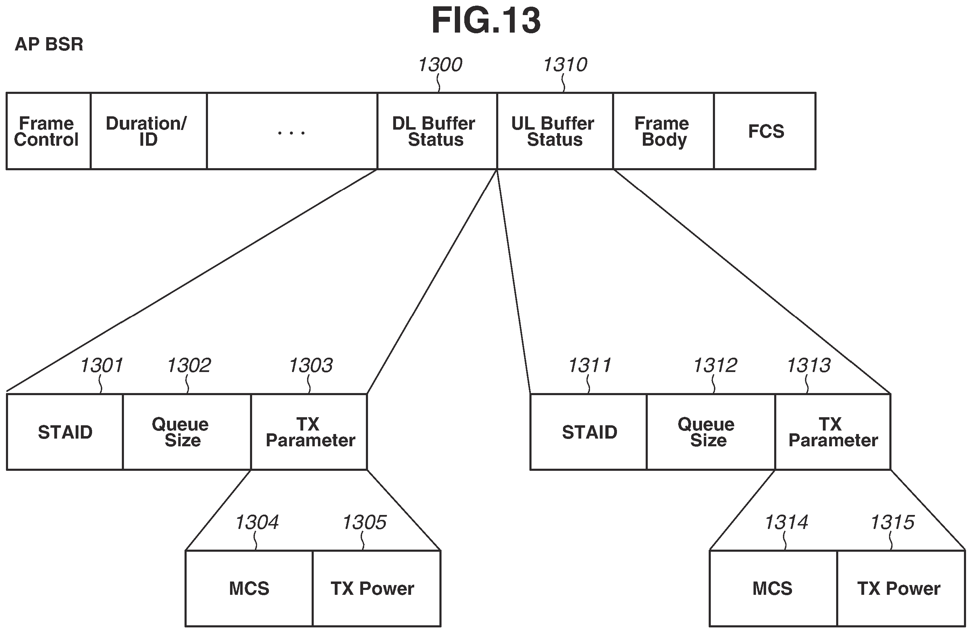

Further, Fig. 13 illustrates another example in which the queue size for each STA is indicated in the DL buffer status field and the UL buffer status field in the AP BSR frame. Information indicating the transmission buffer status for DL communication is included in a DL Buffer Status field 1300. The DL Buffer Status field 1300 includes a Station Identifier (STAID) field 1301 and includes information for identification of an STA connected to the Coordinated AP. The STAID field 1301 includes, for example, a MAC address of the STA, information about an association identifier (AID), and the like. A Queue Size field 1302 includes information indicating a transmission buffer size for data addressed to the STA identified by the STAID field 1301. In addition, a TX Parameter field 1303 stores transmission parameters applied when the Coordinated AP transmits data addressed to the STA identified by the STAID field 1301. The transmission parameters include, for example, an MCS field 1304 and a TX Power field 1305. The MCS field 1304 includes information about a modulation method, such as QPSK (Quadrature Phase Shift Keying) and 16QAM (Quadrature Amplitude Modulation), and information about a coding ratio. A TX Power field 1305 indicates the value of the transmission power when the MCS specified by the MCS field 1304 is applied to a PPDU to be transmitted. When the Coordinated AP receives a Multi-AP BSRP Trigger frame in which "1" is set in the TX Parmeter Required field from the Coordinator AP, the Coordinated AP may include the TX Parameter field 1303 in the AP BSR frame. In response to receipt of this information, the coordinator AP can calculate the communication time in a case where the data of the size specified by the Queue Size field 1302 is transmitted with the transmission parameters specified by the TX Parameter field 1303, and can more accurately estimate the TXOP to be allocated to the Coordinated AP. Although in the example in Fig. 13, the AP BSR frame includes the DL Buffer Status information about one STA, information about a plurality of STAs may be included.

Information indicating the transmission buffer status for UL communication is included in an UL Buffer Status field 1310. The UL Buffer Status field 1310 includes a Station Identifier (STAID) field 1311 and includes information for identification of an STA connected to the Coordinated AP. A Queue Size field 1312 includes information indicating a transmission buffer size for data addressed to the Coordinated AP by the STA identified by the STAID field 1301. In addition, a TX Parameter field 1313 stores transmission parameters to be applied when the STA connected to the Coordinated AP identified by the STAID field 1311 transmits data addressed to the Coordinated AP.

The transmission parameters include, for example, an MCS field 1314 and a TX Power field 1315. In response to receipt of this information, the coordinator AP can calculate the communication time in a case where the data of the size specified by the Queue Size field 1312 is transmitted with the transmission parameters specified by the TX Parameter field 1313, and can more accurately estimate the TXOP to be allocated to the Coordinated AP. Although in the example in Fig. 13, the AP BSR frame includes the UL Buffer Status information about one STA, information about a plurality of STAs may be included.

The AP BSR frame in the present embodiment is an example of the name of a frame for reporting information for determination of the TXOPs to be allocated to the access points. Another name may be used alternatively.

### (Flow of Processing)

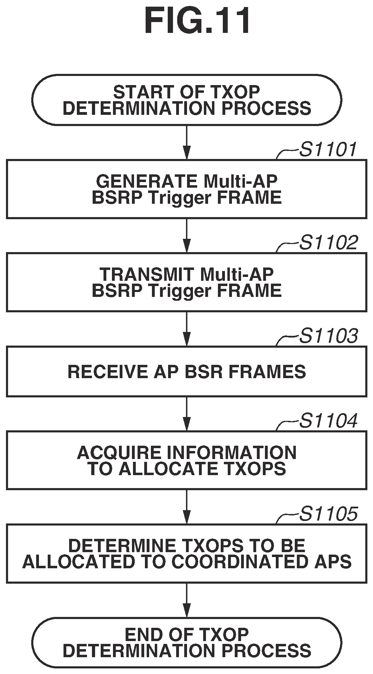

Control of a TXOP determination process that is executed by a coordinator AP according to the present invention will be described with reference to a flowchart in Fig. 11. The AP 100 starts this process when the AP 100 determines to allocate part of its secured TXOP to Coordinated APs.

First, in step S1101, the AP 100 generates a Multi-AP BSRP Trigger frame to request information for determination of the TXOPs to be allocated. For example, when the Multi-AP BSRP Trigger frame in Fig. 7 is used, "8" indicating a Multi-AP BSRP Trigger is set in the Trigger Type field 703. In addition, various fields included in the Trigger Dependent Common Info field 704 and a User Info field that is information unique to each AP are set. Next, in step S1102, the AP 100 transmits the Multi-AP BSRP Trigger frame. This frame is broadcast to the surroundings including the APs 101 and 102.

Next, in step S1103, the AP 100 receives an AP BSR frame transmitted from the APs 101 and 102 as a response to the Multi-AP BSRP Trigger frame. Next, in step S1104, the AP 100 acquires the information included in the AP BSR frames. Next, in step S1105, the AP 100 determines the TXOPs to be allocated to their respective Coordinated APs based on the information about the transmission buffer statuses included in the AP BSR frames. Regarding the TXOP determination method, for example, the ratio of the TXOPs to be allocated to the APs may be determined based on the ratio of the buffer amounts indicated by the AP BSR frames. An allocated TXOP may be determined by calculating the communication time required to transmit the data of the buffer amount indicated by the corresponding AP BSR frame. The TXOPs to be allocated to the APs may be determined based on the buffer amount of a TID with a high priority. Transmission parameter information acquired from a Coordinated AP may be used to calculate the communication time required to transmit data. For example, in a case where the transmission parameter information includes an MCS, because the physical layer data rate can be determined, the communication time can be determined based on the data rate and the buffer amount. In addition, in a case where the transmission parameter information includes information about the transmission power, the communication time in a case where the transmission power of a corresponding Coordinated AP or an STA connected to the Coordinated AP is changed may be calculated. For example, in a case where the transmission power is increased to be higher than the transmission power indicated by the AP BSR frame, it may be possible to increase the physical layer data rate by applying an MCS having a higher data rate than the MCS indicated by the AP BSR frame. As a result, the communication time could be shortened. To change the transmission power, the Coordinator AP may instruct the Coordinated AP or the STA connected to the Coordinated AP to change the transmission power, by including information about the changed transmission power in the MU-RTS TXS Trigger frame for allocation of the TXOP.

As described above, the Coordinator AP can acquire information about the transmission buffer statuses by transmitting a Trigger frame requesting information for determination of the TXOPs to be allocated to the Coordinated APs. After acquiring the information about the transmission buffer statuses from the Coordinated APs, the AP 100 can determine the TXOPs to be allocated to the Coordinated APs.

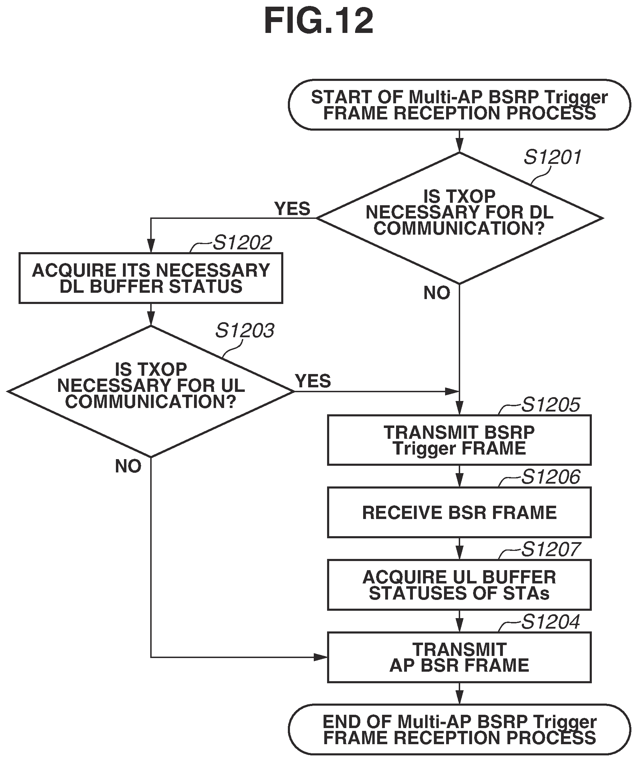

Next, control executed by an individual Coordinated AP according to the present invention will be described with reference to a flowchart in Fig. 12. Each of the APs 101 and 102 starts this process when the AP determines that it has received the Multi-AP BSRP Trigger frame requesting information for determination of the TXOPs to be allocated by the Coordinator AP. Although the following description is performed with the AP 101 as the subject, the AP 102 also performs the same process.

First, in step S1201, the AP 101 determines whether a TXOP needs to be allocated for DL communication. For example, when the Multi-AP BSRP Trigger frame in Fig. 7 is to be used, whether DL communication is necessary may be determined based on the Direction field 705. Alternatively, the AP 101 itself may determine whether DL communication is necessary, regardless of the content of the Multi-AP BSRP Trigger frame. In a case where it is determined that a TXOP is necessary for DL communication (YES in step S1201), in step S1202, the AP 101 acquires its transmission buffer status necessary for DL communication. Next, in step S1203, it is determined whether a TXOP needs to be allocated for UL communication, too. In a case where a TXOP is needed only for DL communication (NO in step S1203), in step S1204, the AP 101 transmits an AP BSR frame including information indicating the necessary transmission buffer status to the Coordinator AP. For example, when the AP BSRP frame in Fig. 8 is used, the AP 101 sets the information indicating the necessary transmission buffer status in the DL Buffer Status field, and transmits the frame.

On the other hand, in a case where the AP 101 determines that a TXOP is not necessary for DL communication (NO in step S1201) or if the AP 101 determines that a TXOP is also necessary for UL communication (YES in step S1203), in step S1205, the AP 101 transmits a BSRP Trigger frame to notify the AP 100 of the transmission buffer statuses of the STAs connected to the AP 101. In a case where the AP 101 has already grasped the transmission buffer statuses of the STAs connected thereto, steps S1205 and S1206 may be skipped. Next, in step S1206, the AP 101, which has transmitted the BSRP Trigger frame in step S1205, receives a BSR frame including the transmission buffer status from the individual STA, and in step S1207, the AP 101 acquires the transmission buffer status included in the received BSR frame. Next, in step S1204, the AP 101 transmits a response including information on the transmission buffer status indicated by the AP BSR frame to the Coordinator AP. For example, when the AP BSRP frame in Fig. 8 is used, the AP 101 sets information indicating the necessary transmission buffer status in the UL Buffer Status field and transmits the frame. In a case where the transmission buffer status of each STA is not included in the UL Buffer Status field as in Fig. 8, the AP 101 stores a transmission buffer status obtained by aggregating the transmission buffer status included in the BSR frame of each STA for each TID in the field. In addition, for example, in a case where an AP BSR frame in which a transmission buffer status for DL and a transmission buffer status for UL are collected in one field as illustrated in Fig. 10 is used, the AP 101 stores a transmission buffer status in which the transmission buffer statuses included in the BSR frames of the STAs and the transmission buffer status of the AP are aggregated in the one field.

As described above, the Coordinated APs can respond to a Multi-AP BSRP Trigger frame requesting information for determination of the TXOPs to be allocated.

### (Other Modifications)

In the individual embodiment above-described, the individual Coordinated AP transmits information about its transmission buffer status as a respond to a Trigger frame transmitted by the Coordinator AP. However, the present invention is not limited to this method. The information may be any information to be used for the Coordinator AP to determine the TXOPs to be allocated. For example, instead of the information about the transmission buffer status, for example, the Coordinated AP may transmit information about the communication time that the Coordinated AP wishes to be allocated. For example, the communication time may be specified in units, such as microseconds or milliseconds, or may be specified in multiples of a predetermined time unit.

### (Other Embodiments)

The present invention can also be implemented by supplying a program that realizes one or more functions of the above-described embodiments to a system or apparatus via a network or a storage medium, and having one or more processors of the computer in the system or apparatus read and execute the program. Furthermore, the invention can also be implemented by a circuit (e.g., an ASIC) that realizes one or more functions.

The invention is not limited to the above-described embodiments, and various modifications and variations can be made without departing from the spirit and scope of the invention. Accordingly, claims are appended to publicly disclose the scope of the invention.

### (Summary of Embodiments)

At least part of the above-described embodiments can be summarized as follows.

### (Item 1)

An access point apparatus that performs wireless communication compliant with an IEEE 802.11 standard in coordination with one or more different access point apparatuses, the access point apparatus comprising:
a transmission unit configured to transmit a request frame requesting a transmission buffer status to the different access point apparatus; and
a reception unit configured to receive a response frame including a transmission buffer status from the different access point apparatus.

### (Item 2)

The access point apparatus according to Item 1, wherein the request frame includes information indicating a request for a transmission buffer status of the different access point apparatus in a downlink (DL) communication of the different access point apparatus.

### (Item 3)

The access point apparatus according to Item 1 or 2, wherein the request frame includes information indicating request for a transmission buffer status of one or more stations connected to the different access point apparatus in an uplink (UL) communication of the different access point apparatus.

### (Item 4)

The access point apparatus according to any one of Items 1 to 3, wherein the request frame includes information requesting acquisition of a transmission parameter of the different access point apparatus in the DL communication.

### (Item 5)

The access point apparatus according to any one of Items 1 to 4, wherein the request frame includes information requesting acquisition of a transmission parameter of one or more stations connected to the different access point apparatus in the UL communication.

### (Item 6)

The access point apparatus according to any one of Items 1 to 5, wherein the request frame includes information about an acquisition order of a transmission buffer status of one or more stations connected to the different access point apparatus in the UL communication.

### (Item 7)

The access point apparatus according to any one of Items 1 to 6, wherein the request frame includes information about a timing at which the response frame is transmitted.

### (Item 8)

The access point apparatus according to any one of Items 1 to 7, wherein the response frame includes a transmission buffer status of the different access point apparatus in the DL communication.

### (Item 9)

The access point apparatus according to any one of Items 1 to 8, wherein the response frame includes a transmission buffer status of one or more station apparatuses connected to the different access point apparatus in the UL communication.

### (Item 10)

The access point apparatus according to any one of Items 1 to 9, wherein the response frame includes a transmission parameter of the different access point apparatus in the DL communication.

### (Item 11)

The access point apparatus according to any one of Items 1 to 10, wherein the response frame includes a transmission parameter of one or more stations connected to the different access point apparatus in the UL communication.

### (Item 12)

The access point apparatus according to any one of Items 1 to 11, wherein the response frame includes information about an aggregation of a transmission buffer state of one or more station apparatuses connected to the different access point apparatus.

### (Item 13)

The access point apparatus according to any one of Items 1 to 12, wherein the response frame includes information about an aggregation of a transmission buffer status of the different access point apparatus and a transmission buffer status of one or more station apparatuses connected to the different access point apparatus.

### (Item 14)

An access point apparatus that performs wireless communication compliant with an IEEE 802.11 standard in coordination with one or more different access point apparatuses, the access point apparatus comprising:
a transmission unit configured to transmit a request frame requesting a communication time to the different access point apparatus; and
a reception unit configured to receive a response frame including a communication time from the different access point apparatus.

### (Item 15)

The access point apparatus according to Item 14, wherein the request frame includes information indicating a request for a communication time of the different access point apparatus in a downlink (DL) communication of the different access point apparatus.

### (Item 16)

The access point apparatus according to Item 14 or 15, wherein the request frame includes information indicating a request for a communication time of one or more stations connected to the different access point apparatus in an uplink (UL) communication of the different access point apparatus.

### (Item 17)

The access point apparatus according to any one of Items 14 to 16, wherein the request frame includes information about an order of acquisition of a communication time of one or more stations connected to the different access point apparatus.

### (Item 18)

The access point apparatus according to any one of Items 14 to 17, wherein the response frame includes a communication time of the different access point apparatus in the DL communication.

### (Item 19)

The access point apparatus according to any one of Items 14 to 18, wherein the response frame includes a communication time of one or more station apparatuses connected to the different access point apparatus in the UL communication.

### (Item 20)

The access point apparatus according to any one of Items 14 to 19, wherein the response frame includes information about an aggregation of a communication time of one or more station apparatuses connected to the different access point apparatus.

### (Item 21)

The access point apparatus according to any one of Items 14 to 20, wherein the response frame includes information about an aggregation of a communication time of the different access point apparatus and a communication time of one or more station apparatuses connected to the different access point apparatus.

### (Item 22)

A control method of an access point apparatus that performs wireless communication compliant with an IEEE 802.11 standard in coordination with one or more different access point apparatuses, the control method comprising:
a transmission step of transmitting a request frame requesting a transmission buffer status to the different access point apparatus; and
a reception step of receiving a response frame including a transmission buffer status from the different access point apparatus.

### (Item 23)

A control method of an access point apparatus that performs wireless communication compliant with an IEEE 802.11 standard in coordination with one or more different access point apparatuses, the control method comprising:
a transmission step of transmitting a request frame requesting a communication time to the different access point apparatus; and
a reception step of receiving a response frame including a communication time from the different access point apparatus.

### (Item 24)

A program for causing a computer to execute the control method of the access point apparatus according to Item 22 or 23.

The invention is not limited to the above-described embodiments, and various modifications and variations can be made without departing from the spirit and scope of the invention. Accordingly, claims are appended to publicly disclose the scope of the invention.

This application claims the benefit of Japanese Patent Applications No. 2023-141711, filed August 31, 2023, and No. 2024-091839, filed June 5, 2024, which are hereby incorporated by reference herein in their entirety.

### Explanation of Reference Numerals

- 100: AP
- 101: AP
- 102: AP
- 110: network
- 111: network
- 112: network
- 120: STA
- 121: STA
- 122: STA
- 123: STA

## Claims

1. An access point apparatus that performs wireless communication compliant with an IEEE 802.11 standard in coordination with one or more different access point apparatuses, the access point apparatus comprising:
a transmission unit configured to transmit a request frame requesting a transmission buffer status to the different access point apparatus; and
a reception unit configured to receive a response frame including a transmission buffer status from the different access point apparatus.

2. The access point apparatus according to claim 1,
wherein the request frame includes information indicating a request for a transmission buffer status of the different access point apparatus in a downlink (DL) communication of the different access point apparatus.

3. The access point apparatus according to claim 1,
wherein the request frame includes information indicating request for a transmission buffer status of one or more stations connected to the different access point apparatus in an uplink (UL) communication of the different access point apparatus.

4. The access point apparatus according to claim 2,
wherein the request frame includes information requesting acquisition of a transmission parameter of the different access point apparatus in the DL communication.

5. The access point apparatus according to claim 3,
wherein the request frame includes information requesting acquisition of a transmission parameter of one or more stations connected to the different access point apparatus in the UL communication.

6. The access point apparatus according to claim 3,
wherein the request frame includes information about an acquisition order of a transmission buffer status of one or more stations connected to the different access point apparatus in the UL communication.

7. The access point apparatus according to claim 1,
wherein the request frame includes information about a timing at which the response frame is transmitted.

8. The access point apparatus according to claim 1,
wherein the response frame includes a transmission buffer status of the different access point apparatus in the DL communication.

9. The access point apparatus according to claim 1,
wherein the response frame includes a transmission buffer status of one or more station apparatuses connected to the different access point apparatus in the UL communication.

10. The access point apparatus according to claim 8,
wherein the response frame includes a transmission parameter of the different access point apparatus in the DL communication.

11. The access point apparatus according to claim 9,
wherein the response frame includes a transmission parameter of one or more stations connected to the different access point apparatus in the UL communication.

12. The access point apparatus according to claim 1,
wherein the response frame includes information about an aggregation of a transmission buffer state of one or more station apparatuses connected to the different access point apparatus.

13. The access point apparatus according to claim 1,
wherein the response frame includes information about an aggregation of a transmission buffer status of the different access point apparatus and a transmission buffer status of one or more station apparatuses connected to the different access point apparatus.

14. An access point apparatus that performs wireless communication compliant with an IEEE 802.11 standard in coordination with one or more different access point apparatuses, the access point apparatus comprising:
a transmission unit configured to transmit a request frame requesting a communication time to the different access point apparatus; and
a reception unit configured to receive a response frame including a communication time from the different access point apparatus.

15. The access point apparatus according to claim 14,
wherein the request frame includes information indicating a request for a communication time of the different access point apparatus in a downlink (DL) communication of the different access point apparatus.

16. The access point apparatus according to claim 14,
wherein the request frame includes information indicating a request for a communication time of one or more stations connected to the different access point apparatus in an uplink (UL) communication of the different access point apparatus.

17. The access point apparatus according to claim 16,
wherein the request frame includes information about an order of acquisition of a communication time of one or more stations connected to the different access point apparatus.

18. The access point apparatus according to claim 14,
wherein the response frame includes a communication time of the different access point apparatus in the DL communication.

19. The access point apparatus according to claim 14,
wherein the response frame includes a communication time of one or more station apparatuses connected to the different access point apparatus in the UL communication.

20. The access point apparatus according to claim 14,
wherein the response frame includes information about an aggregation of a communication time of one or more station apparatuses connected to the different access point apparatus in the UL communication.

21. The access point apparatus according to claim 14,
wherein the response frame includes information about an aggregation of a communication time of the different access point apparatus and a communication time of one or more station apparatuses connected to the different access point apparatus.

22. A control method of an access point apparatus that performs wireless communication compliant with an IEEE 802.11 standard in coordination with one or more different access point apparatuses, the control method comprising:
a transmission step of transmitting a request frame requesting a transmission buffer status to the different access point apparatus; and
a reception step of receiving a response frame including a transmission buffer status from the different access point apparatus.

23. A control method of an access point apparatus that performs wireless communication compliant with an IEEE 802.11 standard in coordination with one or more different access point apparatuses, the control method comprising:
a transmission step of transmitting a request frame requesting a communication time to the different access point apparatus; and
a reception step of receiving a response frame including a communication time from the different access point apparatus.

24. A program for causing a computer to execute the control method of the access point apparatus according to claim 22 or 23.
